# EUROPEAN PATENT SPECIFICATION

(11) **EP 4 425 651 B1**
(45) Date of publication and mention of the grant of the patent: **21.10.2026**
(21) Application number: 22919448.5
(22) Date of filing: 14.01.2022
(51) Int. Cl.: H01M 50/103, H01M 50/102, H01M 50/147, H01M 50/155, H01M 50/595, H01M 50/164, H01M 50/588, H01M 50/15

(54) **BATTERY CELL, BATTERY, ELECTRONIC DEVICE, AND METHOD AND APPARATUS FOR PREPARING BATTERY CELL**
BATTERIEZELLE, BATTERIE, ELEKTRONISCHE VORRICHTUNG SOWIE VERFAHREN UND VORRICHTUNG ZUR HERSTELLUNG EINER BATTERIEZELLE
ÉLÉMENT DE BATTERIE, BATTERIE, DISPOSITIF ÉLECTRONIQUE, ET PROCÉDÉ ET APPAREIL DE PRÉPARATION D'ÉLÉMENT DE BATTERIE

(43) Date of publication of application: 04.09.2024
(60) Divisional application: 26205490.1
(73) Proprietor: Contemporary Amperex Technology (Hong Kong) Limited, Central, Hong Kong (HK)
(72) Inventor: XIAO, Jun, Ningde, Fujian 352100 (CN); DUAN, Song, Ningde, Fujian 352100 (CN); SUN, Caiying, Ningde, Fujian 352100 (CN)
(74) Representative: Gong, Jinping
(86) International application number: PCT/CN2022/071936
(87) International publication number: WO 2023/133788

(56) References cited:
- EP-A1- 4 199 205
- CN-U- 211 555 947
- CN-U- 213 093 269
- CN-U- 213 093 269
- CN-U- 213 150 879
- CN-Y- 201 402 845
- JP-A- 2012 033 419

## Description

### TECHNICAL FIELD

This application relates to the field of battery technology, and in particular, to a battery cell as specified in any of claims 1-11, a battery as specified in claim 12, an electrical device as specified in claim 13, and a method for manufacturing a battery cell as specified in claim 14.

### BACKGROUND

With the development of battery technology, various performance indicators of batteries are improved continuously. Safety is not negligible in addition to improvement of battery performance. To insulate and isolate a shell of a battery cell from the outside, the shell of the battery cell usually needs to be wrapped with a dielectric film. However, components such as electrode terminals are usually disposed on an end cap of the battery cell, and are prone to interfere with the placement of dielectric film and result in flanging and warping of the dielectric film. EP4199205A1, which is comprised in the state of the art pursuant to Article 54(3) EPC, relates to a battery cell. CN213093269U relates to a battery case and a battery

Therefore, how to ensure effective insulative protection of the dielectric film for the battery cell is still a problem to be solved.

### SUMMARY

In view of the above problems, this application provides a battery cell, a battery, an electrical device, and a method and apparatus for manufacturing a battery cell to ensure effective insulative protection of the dielectric film for the battery cell.

According to a first aspect, this application provides a battery cell. The battery cell includes: a housing, including a first opening and configured to accommodate an electrode assembly of the battery cell; an end cap, configured to fit and cover the first opening; and a first dielectric film, configured to dielectrically protect the end cap, where the first dielectric film includes: a body portion, where the body portion is configured to cover a surface of the end cap, the surface being away from the housing; and a plurality of extension portions. The plurality of extension portions surround the body portion. Each of the plurality of extension portions is connected to one edge of the body portion and extends away from a center of the body portion. The extension portion is able to be bent toward the housing and cover at least a part of an outer sidewall of the housing. A reinforcing rib is disposed at a junction between the extension portion and the body portion.

By covering the end cap of the battery cell with the first dielectric film that contains an extension portion, the first dielectric film is enabled to closely fit the end cap of the battery cell. In this way, the dielectric film avoids the problems of flanging and warping caused by interference of components disposed on the end cap of the battery cell, and is ensured to provide effective insulative protection for the battery cell.

In addition, before the first dielectric film is disposed to cover the end cap of the battery cell, the extension portion of the first dielectric film is coplanar with the body portion, thereby saving stacking space during assembling. To be specific, a larger number of the first dielectric films can be stacked at one time in an assembling machine, thereby improving production efficiency. With the extension portion being coplanar with the body portion, deformation is not prone to occur during the assembling. Even if a slight deformation occurs, the adverse effect of the deformation can be eliminated in a process of pressing the first dielectric film to cover the end cap, thereby lowering the requirement on a positioning precision of the assembling machine, and improving production efficiency while ensuring effective insulative protection for the battery cell.

In some embodiments, a thickness of the extension portion is less than a thickness of the body portion.

The body portion assumes a specified thickness to ensure sufficient rigidity of the first dielectric film, and can maintain an original shape without deformation in a process of being fitted onto the end cap of the battery cell by an assembling machine, thereby ensuring accurate mounting of the first dielectric film. The thickness of the extension portion is less than the thickness of the body portion, thereby occupying as little space as practicable in the battery while dielectrically protecting the outer sidewall, and improving the energy density of the battery.

The reinforcing rib disposed at the junction between the extension portion and the body portion increases the strength of the first dielectric film, avoids insulation failure caused by damage to the first dielectric film, and ensures effective insulative protection of the first dielectric film for the battery cell.

In some embodiments, the first dielectric film includes a second opening. The second opening is configured to avoid an electrode terminal and a pressure relief mechanism of the battery cell.

By creating the second opening on the first dielectric film, the components disposed on the end cap of the battery cell, such as the electrode terminal and the pressure relief mechanism, are caused to be normally available. A part of the end cap, on which no component is disposed, can be covered by the first dielectric film, so as to ensure effective insulative protection of the dielectric film for the battery cell.

In some embodiments, the body portion includes a protruding portion. The protruding portion protrudes beyond the body portion from a side of the body portion, the side being away from the battery cell. The protruding portion is recessed in the body portion on a side oriented toward the battery cell, so as to form a cavity structure. The cavity structure is configured to accommodate a part of the end cap, the part protruding away from an interior of the battery cell.

The protruding portion of the first dielectric film adaptively provides insulative protection for the battery cell with an end cap containing a bulge, and prevents the dielectric film from being interfered with by a part of the end cap, the part protruding away from the interior of the battery cell. This avoids the problem of insulation failure caused by weak adhesion of the dielectric film, ensures effective insulative protection of the dielectric film for the battery cell, and improves the safety performance of the battery cell.

In some embodiments, an edge of a part of the battery cell, the part protruding beyond the end cap, assumes a chamfer structure. An edge of the cavity structure assumes a transition structure that matches the chamfer structure.

The chamfer structure is disposed at the edge of the part of the battery cell, the part protruding beyond the end cap. In this way, the transition between the two intersecting faces on the end cap is caused to be more natural. This can lower the requirement on the precision of alignment performed by the assembling machine between the first dielectric film and the end cap of the battery cell in a process of assembling the first dielectric film. Even if a slight misalignment occurs, the first dielectric film and the end cap can be guided to a correct position by the chamfer structure. In addition, the cavity structure of the first dielectric film assumes a transition structure that matches the chamfer structure, thereby making the first dielectric film closely fit a part of the battery cell, where the part protruding beyond the end cap. This avoids looseness of the dielectric film at the corners, and ensures effective insulative protection of the dielectric film for the battery cell.

In some embodiments, the body portion and the extension portions are made of a same material and formed in one piece.

When the body portion and the extension portions are made of the same material and formed in one piece, the body portion can be coherently connected to the extension portion without a need to be connected in an additional manner, thereby reducing the probability of a defect occurring in the first dielectric film itself, and ensuring effective insulative protection of the body portion and the extension portion for the battery cell.

In some embodiments, a binder is disposed on a side of the first dielectric film, the side being oriented toward the battery cell. The binder is configured to adhere the first dielectric film to the battery cell.

By disposing the binder on a side of the first dielectric film, the side being oriented toward the battery cell, the first dielectric film is made to closely fit the battery cell and not prone to fall off, thereby ensuring effective insulative protection of the first dielectric film for the end cap of the battery cell.

In some embodiments, a thickness of the body portion is 0.3 to 0.5 mm, and a thickness of the extension portion is 0.1 mm.

If the thickness of the body portion is overly large, the height of the first dielectric film that covers the end cap will be increased, and may adversely affect the normal use of the components disposed on the end cap. In addition, the overly thick body portion increases the weight of the first dielectric film, and is at risk of falling off in a process of automatic assembling. If the thickness of the body portion is overly small, the first dielectric film will be not rigid enough, and is prone to deform during the assembling, thereby increasing the difficulty of assembling. Therefore, the thickness of the body portion is set to be 0.3 mm to 0.5 mm, thereby not only ensuring normal use of the components on the end cap, but also facilitating assembling.

If the thickness of the extension portion is overly large, the extension portion occupies much space of the battery, thereby impairing the energy density of the battery. If the thickness of the extension portion is overly small, an adverse effect will be exerted on the production of the first dielectric film, and it is difficult to ensure effective insulative protection for the battery cell. Therefore, the thickness of the extension portion is set to 0.1 mm, thereby not only ensuring effective insulative protection for the battery cell, but also avoiding occupancy of much space, and improving the energy density of the battery.

In some embodiments, the body portion is quadrilateral, and the number of the extension portions is four.

The body portion is quadrilateral and the number of extension portions is four, thereby ensuring that the body portion fully covers the end cap of the battery cell. In addition, the extension portion can cover at least a part of each outer sidewall after being bent. In this way, all the junction between the end cap and the sidewall can be covered by the first dielectric film, thereby ensuring effective insulative protection of the dielectric film for the battery cell.

In some embodiments, the battery cell further includes a second dielectric film. The second dielectric film wraps the housing. An edge of the second dielectric film, the edge being oriented toward the extension portion, does not exceed an edge of intersection between the housing and the end cap. The second dielectric film is configured to dielectrically protect the housing of the battery cell.

The second dielectric film can serve to dielectrically protect the housing of the battery cell. In addition, the second dielectric film does not need to be folded toward the end cap, thereby effectively avoiding the interference caused to the folded edge by the components such as the electrode terminal on the end cap or by a protruding structure on the end cap, and also preventing the dielectric film from falling off, and in turn, ensuring effective insulative protection of the dielectric film for the battery cell.

In some embodiments, an edge of a second dielectric film, which is oriented toward the extension portion, is connected to an edge of the extension portion.

The edge of the second dielectric film, which is oriented toward the extension portion, is connected to the edge of the extension portion, so that neither an overlapping part of the dielectric film nor a part not covered with the dielectric film exists on the housing of the battery cell. In this way, the second dielectric film serves a waterproof function to some extent while dielectrically protecting the battery cell, and prevents the space on the shell of the battery cell from being occupied by the overlapping part, thereby increasing the battery density.

According to a second aspect, this application provides a battery. The battery includes: the battery cell according to any one of claims 1-11, and a box, configured to accommodate the battery cell.

According to a third aspect, this application provides an electrical device. The electrical device includes the battery according to claim 12. The battery is configured to provide electrical energy for the electrical device.

According to a fourth aspect, this application provides a method for manufacturing a battery cell. The method includes: providing a housing, where the housing includes a first opening and is configured to accommodate an electrode assembly of the battery cell; providing an end cap, where the end cap is configured to fit and cover the first opening; and providing a first dielectric film, where the first dielectric film is configured to dielectrically protect the end cap. The first dielectric film includes: a body portion, where the body portion is configured to cover a surface of the end cap, the surface being away from the housing; and a plurality of extension portions, where the plurality of extension portions surround the body portion. Each of the plurality of extension portions is connected to one edge of the body portion and extends away from a center of the body portion. The extension portion is able to be bent toward the housing and cover at least a part of an outer sidewall of the housing; wherein a reinforcing rib is disposed at a junction between the extension portion and the body portion.

### BRIEF DESCRIPTION OF DRAWINGS

To describe the technical solutions of some embodiments of this application more clearly, the following outlines the drawings used in the embodiments of this application. Evidently, the drawings outlined below are merely a part of embodiments of this application.
FIG. 1 is a schematic structural diagram of a vehicle according to some embodiments of this application;
FIG. 2 is a schematic exploded view of a battery according to some embodiments of this application;
FIG. 3 is a schematic structural diagram of a battery cell according to some embodiments of this application;
FIG. 4 is a schematic diagram of a battery cell according to some embodiments of this application;
FIG. 5 is a schematic structural diagram of a first dielectric film according to some embodiments of this application;
FIG. 6 is a schematic diagram of a battery cell covered with a first dielectric film according to some embodiments of this application;
FIG. 7 is a close-up view of a part M shown in FIG. 5;
FIG. 8 is a schematic structural diagram of another battery cell according to some embodiments of this application;
FIG. 9 is a schematic structural diagram of another first dielectric film according to some embodiments of this application;
FIG. 10 is a schematic structural diagram of another battery cell according to some embodiments of this application;
FIG. 11 is a schematic flowchart of a method for manufacturing a battery cell according to some embodiments of this application; and
FIG. 12 is a schematic block diagram of an apparatus for manufacturing a battery cell according to some embodiments of this application.

The drawings are not drawn to scale.

### DETAILED DESCRIPTION OF EMBODIMENTS

The following gives a more detailed description of implementations of this application with reference to drawings and embodiments. The detailed description of the following embodiments and drawings are intended to describe the principles of this application illustratively, but not to limit the scope of this application. Therefore, this application is not limited to the described embodiments.

In the description of this application, unless otherwise specified, "a plurality of" means at least two in number; the terms such as "up", "down", "left", "right", "in", and "out" indicating a direction or a position relationship are merely intended for ease or brevity of description of this application, but do not indicate or imply that the mentioned device or component is necessarily located in the specified direction or constructed or operated in the specified direction. Therefore, such terms are not to be understood as a limitation on this application. In addition, the terms "first", "second", "third", and so on are merely used for descriptive purposes, but not construed as indicating or implying relative importance. "Perpendicular" does not means exact perpendicularity, but means perpendicularity falling within an error tolerance range. "Parallel" does not mean exact parallelism, but means parallelism falling within an error tolerance range.

The directional terms appearing in the following description indicate the directions shown in the drawings, but are not intended to limit specific structures in this application. In the description of this application, unless otherwise expressly specified, the terms "mount", "concatenate", and "connect" are understood in a broad sense. For example, a "connection" may be a fixed connection, a detachable connection, or an integrated connection, and may be a direct connection or an indirect connection implemented through an intermediary. A person of ordinary skill in the art can understand the specific meanings of the terms in this application according to specific situations.

In embodiments of this application, the same reference numeral denotes the same component. For brevity, detailed descriptions of the same component are omitted in a different embodiment. Understandably, dimensions such as thickness, length, and width of various components in the embodiments of this application shown in the drawings, and dimensions such as overall thickness, length, and width of an integrated device are merely illustrative descriptions, but do not constitute any limitation on this application.

In this application, a battery cell may include a lithium-ion secondary battery, a lithium-ion primary battery, a lithium-sulfur battery, a sodium-lithium-ion battery, a sodium-ion battery, a magnesium-ion battery, or the like, without being limited in embodiments of this application. The battery cell may be in various shapes such as a cylinder, flat body, or cuboid, without being limited in embodiments of this application. Depending on the form of packaging, the battery cell is typically classed into three types: cylindrical battery cell, prismatic battery cell, and pouch-type battery cell. The embodiments of this application do not limit the type of the battery cell.

The battery mentioned in embodiments of this application means a unitary physical module that includes one or more battery cells to provide a higher voltage and a higher capacity. For example, the battery mentioned in this application may include a battery module, a battery pack, or the like. A battery typically includes a box configured to package one or more battery cells. The box prevents liquid or other foreign matters from affecting the charging or discharging of the battery cells.

A battery cell includes an electrode assembly and an electrolytic solution. The electrode assembly includes a positive electrode plate, a negative electrode plate, and a separator. The battery cell works primarily by shuttling metal ions between the positive electrode plate and the negative electrode plate. The positive electrode plate includes a positive current collector and a positive active material layer. A surface of the positive current collector is coated with the positive active material layer. Of the positive current collector, a part uncoated with the positive active material layer protrudes from a part coated with the positive active material layer. The part, uncoated with the positive active material layer, of the positive current collector, serves as a positive tab. Using a lithium-ion battery as an example, the positive current collector may be made of aluminum, and a positive active material may be lithium cobalt oxide, lithium iron phosphate, ternary lithium, lithium manganese oxide, or the like. The negative electrode plate includes a negative current collector and a negative active material layer. A surface of the negative current collector is coated with the negative active material layer. Of the negative current collector, a part uncoated with the negative active material layer protrudes from a part coated with the negative active material layer, and the part uncoated with the negative active material layer serves as a negative tab. The negative current collector may be made of copper, and a negative active material may be carbon, silicon, or the like. In order to ensure passage of a large current without fusing off, the positive tab is plural in number, and the plurality of positive tabs are stacked together; the negative tab is plural in number, and the plurality of negative tabs are stacked together. The separator may be made of a material such as polypropylene (polypropylene, PP) or polyethylene (polyethylene, PE). In addition, the electrode assembly may be of a jelly-roll type structure or a stacked type structure, without being limited herein.

To meet different power usage requirements, the battery may include a plurality of battery cells. The plurality of battery cells may be connected in series, parallel, or series-and-parallel pattern. The series-and-parallel pattern means a combination of series connection and parallel connection. Optionally, the plurality of battery cells may be connected in series, parallel, or series-and-parallel pattern to form a battery module, and then a plurality of battery modules may be connected in series, parallel, or series-and-parallel pattern to form the battery. In other words, the plurality of battery cells may directly form the battery, or form the battery modules that are then used to form the battery. The battery is further mounted in the electrical device to provide electrical energy for the electrical device.

The development of the battery technology needs to allow for a plurality of design factors, including performance parameters such as energy density, cycle life, discharge capacity, charge rate, and discharge rate, and also needs to ensure safety of the battery. To improve safety of a battery cell, a shell of the battery cell usually needs to be wrapped with a dielectric film.

In the current technical solution in which the shell of the battery cell is wrapped with a dielectric film, the dielectric film that wraps the outer sidewall of the battery cell is usually folded toward an end cap of the battery cell, and then a dielectric film for protecting the end cap is adhered to the folded part so that the dielectric film for protecting the end cap is fixed. However, for a battery cell with a relatively small width or a battery cell with an end cap that contains a bulge, the edge of an electrode terminal or the bulge on the end cap is located relatively close to the edge of the battery cell. When the dielectric film on the outer sidewall of the battery cell is folded toward the end cap of the battery cell, the dielectric film is prone to be blocked by the components such as the electrode terminal and an explosion-proof valve disposed on the end cap, thereby causing flanging or warping of the dielectric film. In addition, because the dielectric film is blocked by the components such as the electrode terminal and the explosion-proof valve on the end cap when the dielectric film is folded toward the end cap of the battery cell, a smaller portion of the dielectric film is available for adhering to the dielectric film on the end cap. Consequently, the dielectric film on the end cap is prone to fall off and cause a safety hazard.

In view of this, this application provides a battery cell. A first dielectric film on an end cap of the battery cell includes an extension portion. The extension portion can be bent toward a housing of the battery cell to cover a part of an outer sidewall of the housing. In an embodiment of this application, the dielectric film on the outer sidewall of the battery cell no longer needs to be folded toward the end cap, and therefore, will not be interfered with by the components such as the electrode terminal or explosion-proof valve disposed on the end cap of the battery cell, thereby achieving a good insulation effect and ensuring effective insulative protection of the dielectric film for the battery cell.

The technical solutions described in this embodiment of this application are applicable to various electrical devices that use a battery. The electrical device may be a vehicle, a mobile phone, a portable device, a notebook computer, a ship, a spacecraft, an electric toy, a power tool, or the like. The vehicle may be an oil-fueled vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, such as a game console, an electric car toy, an electric ship toy, an electric airplane toy, and the like. The power tool includes an electrical metal cutting tool, an electrical grinding tool, an electrical assembling tool, and a power tool for use in railways. Examples of the power tool are an electrical drill, an electrical grinder, an electrical wrench, an electrical screwdriver, an electrical hammer, an electrical impact drill, a concrete vibrator, an electrical planer, and the like. The electrical device is not particularly limited in this embodiment of this application.

For ease of description in the following embodiments, a vehicle is used as an example of the electrical device.

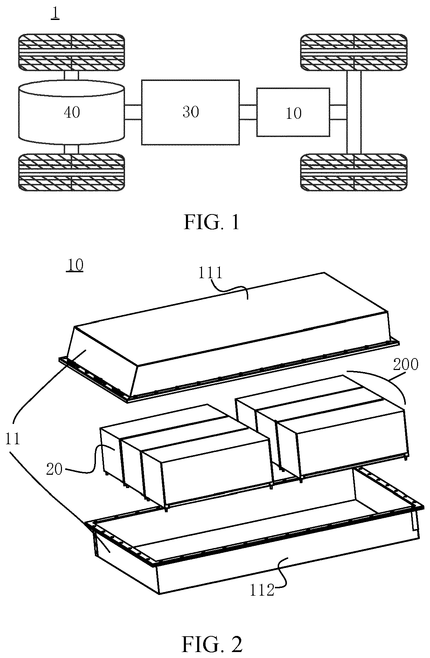

For example, as shown in FIG. 1, which is a schematic structural diagram of a vehicle 1 according to an embodiment of this application, the vehicle 1 may be an oil-fueled vehicle, a natural gas vehicle, or a new energy vehicle. The new energy vehicle may be a battery electric vehicle, a hybrid electric vehicle, a range-extended electric vehicle, or the like. A motor 40, a controller 30, and a battery 10 may be disposed inside the vehicle 1. The controller 30 is configured to control the battery 10 to supply power to the motor 40. For example, the battery 10 may be disposed at the bottom, front, or rear of the vehicle 1. The battery 10 may be configured to supply power to the vehicle 1. For example, the battery 10 may serve as an operating power supply of the vehicle 1 to power a circuit system of the vehicle 1. For example, the battery may be configured to meet operating power usage requirements of the vehicle 1 that is being started or navigated or running. In another embodiment of this application, the battery 10 serves not only as an operating power supply of the vehicle 1, but may also serve as a driving power supply of the vehicle 1 to provide driving power for the vehicle 1 in place of or partly in place of fuel oil or natural gas.

To meet different power usage requirements, the battery may include a plurality of battery cells. The plurality of battery cells may be connected in series, parallel, or series-and-parallel pattern. The series-and-parallel pattern means a combination of series connection and parallel connection. The battery may also be referred to as a battery pack. Optionally, the plurality of battery cells may be connected in series, parallel, or series-and-parallel pattern to form a battery module, and then a plurality of battery modules may be connected in series, parallel, or series-and-parallel pattern to form the battery. In other words, the plurality of battery cells may directly form the battery, or form the battery modules that are then used to form the battery.

For example, FIG. 2 is a schematic structural diagram of a battery 10 according to an embodiment of this application. The battery 10 may include at least one battery module 200. The battery module 200 includes a plurality of battery cells 20. The battery 10 may further include a box 11. The interior of the box 11 is a hollow structure. A plurality of battery cells 20 are accommodated in the box 11. FIG. 2 shows a possible implementation of the box 11 according to this embodiment of this application. As shown in FIG. 2, the box 11 may include two parts, herein referred to as a first part 111 and a second part 112 respectively. The first part 111 and the second part 112 are snap-fitted together. The shapes of the first part 111 and the second part 112 may depend on the shape of the combined battery module 200. An opening is created on at least one of the first part 111 or the second part 112. For example, as shown in FIG. 2, the first part 111 and the second part 112 each may be a hollow cuboid, and each may include one opened surface. The opening of the first part 111 is opposite to the opening of the second part 112. The first part 111 and the second part 112 are snap-fitted to each other to form a box 11 that includes a closed cavity.

For another example, different from what is shown in FIG. 2, of the first part 111 and the second part 112, only one is a hollow cuboid with an opening, and the other assumes a plate shape to cover the opening. For example, the second part 112 is a hollow cuboid with one opened surface, and the first part 111 assumes a plate shape. In this case, the first part 111 fits and covers the opening of the second part 112 to form a box 11 with a closed cavity. The cavity may be configured to accommodate a plurality of battery cells 20. The plurality of battery cells 20 are combined and connected in parallel, series, or series-and-parallel pattern, and then placed into the box 11 that is formed by snap-fitting the first part 111 and the second part 112.

Optionally, the battery 10 may further include other structures, details of which are omitted here. For example, the battery 10 may further include a busbar component. The busbar component is configured to implement electrical connection between the plurality of battery cells 20, such as parallel connection, series connection, or series-parallel connection. Specifically, the busbar component may implement the electrical connection between the battery cells 20 by connecting electrode terminals of the battery cells 20. Further, the busbar component may be fixed to the electrode terminals of the battery cells 20 by welding. Electrical energy of the plurality of battery cells 20 may be further led out by a conductive mechanism running through the box 11.

Depending on different power usage requirements, the number of battery cells 20 in a battery module 200 may be set to any value. A plurality of battery cells 20 may be connected in series, parallel, or series-and-parallel pattern to achieve a relatively high capacity or power. Each battery 10 may include a relatively large number of battery cells 20. Therefore, in order to facilitate mounting, the battery cells 20 may be arranged in groups. Each group of battery cells 20 forms a battery module 200. The number of battery cells 20 included in the battery module 200 is not limited, and may be set as required.

The battery 10 may include a plurality of battery modules 200. The battery modules 200 may be connected in series, parallel, or series-and-parallel pattern.

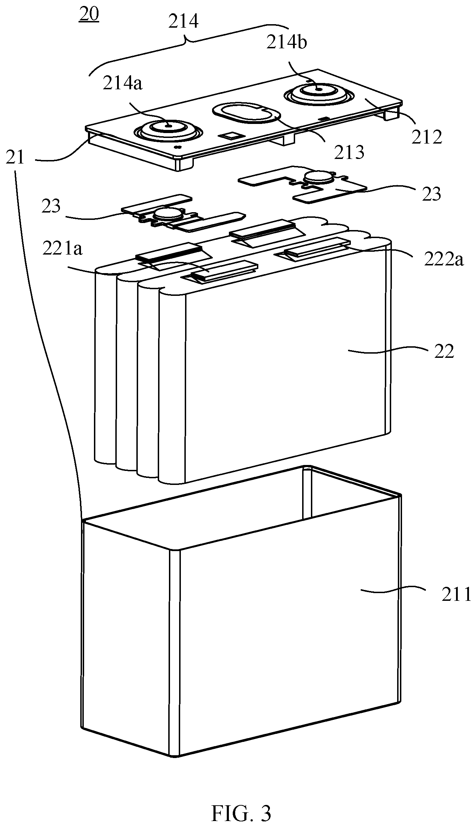

As shown in FIG. 3, which is a schematic structural diagram of a battery cell 20 according to an embodiment of this application, the battery cell 20 includes one or more electrode assemblies 22, a housing 211, and an end cap 212. The housing 211 and the end cap 212 form a shell or a battery box 21.

The housing 211 is a component configured to accommodate the electrode assembly 22. The housing 211 may be a hollow structure opened at one end, or, the housing 211 may be a hollow structure opened at two opposite ends. If the housing 211 is a hollow structure opened at one end, one end cap 212 may be disposed. If the housing 211 is a hollow structure opened at two opposite ends, two end caps 212 may be disposed. The two end caps 212 fit and cover the openings at the two ends of the housing 211 respectively. The housing 211 may be made of a variety of materials such as copper, iron, aluminum, steel, or an aluminum alloy. The housing 211 may be in various shapes such as a cylinder or cuboid. The shape of the housing 211 is determined depending on the shape of a combination of one or more electrode assemblies 22. For example, the housing 211 may be a hollow cuboid or cube or cylinder. One surface of the housing 211 is provided with an opening through which one or more electrode assemblies 22 can be placed into the housing 211 conveniently. For example, when the housing 211 is a hollow cuboid or cube, one of faces of the housing 211 is an opened face. The opened face is not walled so that the inside of the housing 211 communicates with the outside. When the housing 211 is a hollow cylinder, an end face of the housing 211 is opening face. That is, no wall is provided on this end face so that communication is implemented between inside and outside of the housing 211. The end cap 212 covers the opening and is connected to the housing 211 to form a closed cavity that is configured to accommodate the electrode assembly 22. As an example, in FIG. 3, the housing 211 is cuboidal, and the housing 211 is a hollow structure that opens at one end. Both the wall of the housing 211 and the end cap 212 are referred to as walls of the battery cell 20. For a cuboidal battery cell 20, the walls of the housing 211 include a bottom wall and four sidewalls. The housing 211 is filled with an electrolyte such as an electrolytic solution.

The end cap 212 is a component that fits and covers the opening of the housing 211 to isolate the internal environment of the battery cell 20 from the external environment. The shape of the end cap 212 may be adapted to the shape of the housing 211. As shown in FIG. 3, the housing 211 is a cuboidal structure, and the end cap 212 is a rectangular plate-shaped structure adapted to the housing 211. The end cap 212 may be made of a variety of materials such as copper, iron, aluminum, steel, or an aluminum alloy. The material of the end cap 212 may be identical to or different from the material of the housing 211.

The battery cell 20 may further include two electrode terminals 214. The two electrode terminals 214 may be disposed on the end cap 212. The two electrode terminals 214 are fixed onto a flat face in which the end cap 212 is located. The two electrode terminals 214 are a positive electrode terminal 214a and a negative electrode terminal 214b respectively. A connecting member 23, also referred to as a current collection component 23, is disposed corresponding to each electrode terminal 214, located between the end cap 212 and the electrode assembly 22, and configured to electrically connect the electrode assembly 22 and the electrode terminal 214.

The electrode assembly 22 is a component that reacts electrochemically in the battery cell 20. The electrode assembly 22 may be cylindrical, cuboidal, or the like. If the electrode assembly 22 is cylindrical, the housing 211 may be cylindrical accordingly. If the electrode assembly 22 is cuboidal, the housing 211 may be cuboidal accordingly. As shown in FIG. 3, each electrode assembly 22 includes a first tab 221a and a second tab 222a. The polarity of the first tab 221a is opposite to the polarity of the second tab 222a. For example, when the first tab 221a is a positive tab, the second tab 222a is a negative tab. The positive tab may be a stacked part, uncoated with the positive active material layer, on the positive electrode plate; and the negative tab may be a stacked part, uncoated with the negative active material layer, on the negative electrode plate. The first tabs 221a of one or more electrode assemblies 22 are connected to one electrode terminal by one connecting member 23. The second tabs 222a of one or more electrode assemblies 22 are connected to another electrode terminal by another connecting member 23. For example, the positive electrode terminal 214a is connected to the positive tab by one connecting member 23, and the negative electrode terminal 214b is connected to the negative tab by another connecting member 23.

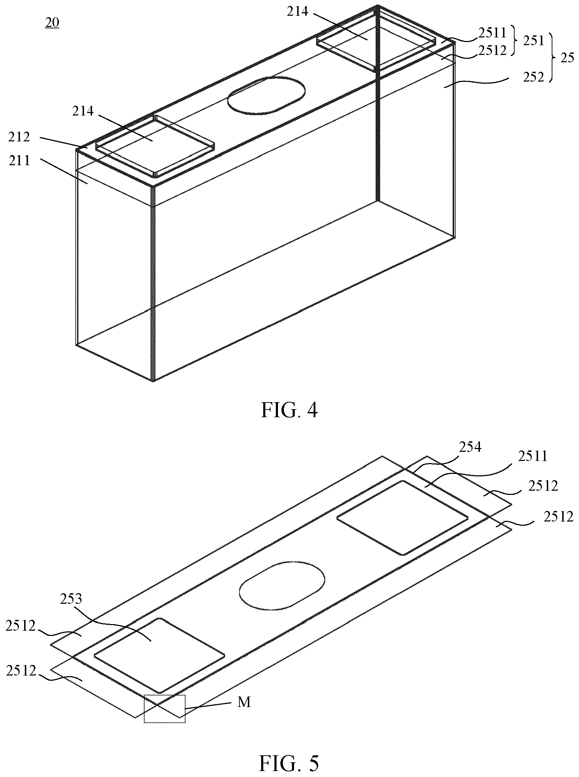

In the battery cell 20, the number of electrode assemblies 22 in the housing 211 may be 1 or more, depending on actual needs. As an example shown in FIG. 3, 4 independent electrode assemblies 22 are disposed in the battery cell 20.

A pressure relief mechanism 213 may be disposed on the battery cell 20. The pressure relief mechanism 213 is configured to be actuated to relieve an internal pressure or temperature when the internal pressure or temperature of the battery cell 20 reaches a threshold.

The pressure relief mechanism 213 may be any of various possible pressure relief structures, without being limited in this embodiment of this application. For example, the pressure relief mechanism 213 may be a temperature-sensitive pressure relief mechanism. The temperature-sensitive pressure relief mechanism is configured to melt when the internal temperature of the battery cell 20 equipped with the pressure relief mechanism 213 reaches a threshold; and/or, the pressure relief mechanism 213 may be a pressure-sensitive pressure relief mechanism. The pressure-sensitive pressure relief mechanism is configured to rupture when the internal air pressure of the battery cell 20 equipped with the pressure relief mechanism 213 reaches a threshold.

The battery cell 20 shown in FIG. 3 is merely an example. In practical production, the shape of the battery cell 20 may vary depending on actual needs.

To dielectrically protect the battery cell 20, a dielectric film 25 may be disposed on the outer side of the battery cell 20, as shown in FIG. 4. FIG. 4 is a schematic diagram of a battery cell 20 according to some embodiments of this application. The battery cell 20 shown in FIG. 4 includes a housing 211, an end cap 212, and a first dielectric film 251. The housing 211 includes a first opening (not shown in the drawing), and is configured to accommodate an electrode assembly of the battery cell 20. The end cap 212 is configured to fit and cover the first opening. The first dielectric film 251 is configured to dielectrically protect the end cap 212. The first dielectric film 251 includes: a body portion 2511, where the body portion 2511 is configured to cover a surface of the end cap 212, the surface being away from the housing 211; and a plurality of extension portions 2512. The plurality of extension portions 2512 surround the body portion 2511. Each extension portion 2512 among the plurality of extension portions 2512 is connected to one edge of the body portion 2511 and extends away from the center of the body portion 2511. The extension portion 2512 is able to be bent toward the housing 211 and cover at least a part of an outer sidewall of the housing 211.

For ease of understanding and description, this embodiment of this application is described by using a cuboidal battery cell 20 as an example. Understandably, this embodiment of this application is also applicable to a polygonal-prism-shaped battery cell 20, and applicable to a battery cell 20 with a plane of an end cap 212 is not perpendicular to the sidewall.

The housing 211 assumes a hollow structure, and a first opening is created at one end of the hollow structure. The housing is a component configured to accommodate an electrode assembly of the battery cell 20. The end cap 212 is configured to fit and cover the first opening to isolate the internal environment of the battery cell 20 from the external environment. On this basis, the battery cell 20 according to this embodiment of this application further includes a first dielectric film 251.

The first dielectric film 251 includes a body portion 2511 and an extension portion 2512. The body portion 2511 is a part of the first dielectric film 251, the part covers a surface of the end cap 212 of the battery cell 20, and the surface is away from the housing 211. The extension portion 2512 is a part of the first dielectric film 251, and the part covers an outer sidewall of the housing 211. Each edge of the body portion 2511 is connected to an extension portion 2512. A plurality of extension portions 2512 surround the body portion 2511.

The junction between the body portion 2511 and the plurality of extension portions 2512 covers the junction between the end cap 212 of the battery cell 20 and the housing 211. The extension portions 2512 that cover different surfaces of the outer sidewall respectively may be in contact with each other, so that the extension portions 2512 on different surfaces are closely connected at the junctions between different surfaces of the outer sidewall to form a gapless dielectric film. That the extension portions 2512 are in contact with each other means, for example, that one edge of an extension portion 2512 is connected to one edge of another extension portion 2512. The junction between the two extension portions 2512 may be a junction between surfaces of the outer sidewall, the surfaces being covered by the two extension portions 2512 respectively.

In FIG. 4, a battery cell 20 with a relatively small width is used as an example. The battery cell 20 with a relatively small width is characterized by a relatively short distance between the edge of the components such as the electrode terminal 214 disposed on the end cap 212 and the edge of the battery cell 20. The first dielectric film 251 covers the end cap 212 of the battery cell 20 and a part of the outer sidewall at the same time. Therefore, the adhesion does not rely on the dielectric film folded toward the end cap 212. Even if the distance between the electrode terminal 214 and the edge of the battery cell 20 is relatively short, no interference is caused to the flanging of the dielectric film, and the dielectric film is prevented from being detached from the end cap 212 due to a small bonding area.

With reference to FIG. 5, the following describes a structure of the first dielectric film 251 on a battery cell 20 with a relatively small width as an example before the first dielectric film 251 is put to cover the end cap 212. FIG. 5 is a schematic structural diagram of the first dielectric film 251 according to some embodiments of this application. FIG. 5 merely shows the structure of the first dielectric film 251 when the battery cell 20 assumes a cuboidal shape. The first insulating film 251 of a battery cell 20 that assumes another structure may be flexibly arranged depending on the specific shape of the battery cell 20.

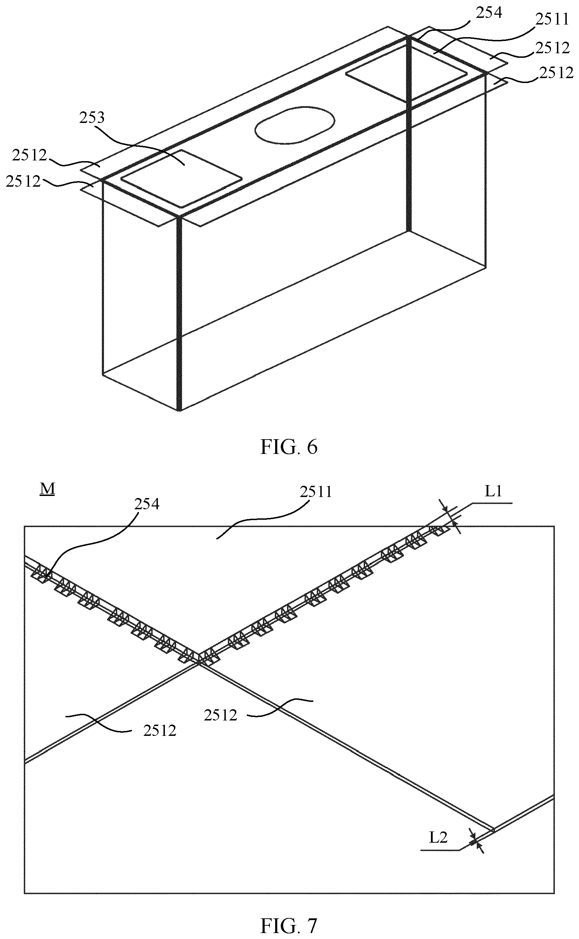

As can be seen from FIG. 5, the first dielectric film 251 includes a plurality of extension portions 2512. Each extension portion 2512 is connected to one edge of the body portion 2511. Each extension portion 2512 extends away from the center of the body portion 2511 along a direction parallel to the body portion 2511. For example, as shown in FIG. 5, the extension direction of each extension portion 2512 may be perpendicular to an edge of the extension portion, the edge being connected to the body portion 2511. The first dielectric film 251 is in a planar state before covering the battery cell 20. In other words, the body portion 2511 is parallel to a plane in which the extension portion 2512 is located. In an assembling process, the assembling machine places the first dielectric film 251 in a planar state onto the end cap 212 of the battery cell 20, as shown in FIG. 6; and then presses down the extension portion 2512 so that the extension portion 2512 is bent toward the housing 211 to cover the outer sidewall of the battery cell 20. As can be seen from FIG. 5 and FIG. 6, before the first dielectric film 251 dielectrically protects the end cap 212 of the battery cell 20, the plurality of extension portions 2512 are separated from each other.

The first dielectric film 251 is configured to dielectrically protect the end cap 212 of the battery cell 20. Therefore, an extension distance of the extension portion 2512 extending away from the center of the body portion 2511 may be set as actually required. For example, after being bent, the extension portion 2512 may cover just a part of the outer sidewall of the battery cell 20 or may cover the entire outer sidewall.

By covering the end cap 212 of the battery cell 20 with the first dielectric film 251 that contains an extension portion 2512, the first dielectric film 251 is enabled to closely fit the end cap 212 of the battery cell 20. In this way, the dielectric film avoids the problems of flanging and warping caused by interference of components disposed on the end cap 212 of the battery cell 20, and is ensured to provide effective insulative protection for the battery cell 20. In addition, before the first dielectric film 251 is disposed to cover the end cap 212 of the battery cell 20, the extension portion 2512 of the first dielectric film is coplanar with the body portion 2511, thereby saving stacking space of the assembling machine during assembling. To be specific, a larger number of the first dielectric films 251 can be stacked at one time in the assembling machine, thereby improving production efficiency. With the extension portion 2512 being coplanar with the body portion 2511, deformation is not prone to occur during the assembling. Even if a slight deformation occurs, the adverse effect of the deformation can be eliminated in a process of pressing down the first dielectric film 251, thereby lowering the requirement on a positioning precision of the assembling machine, and improving production efficiency while ensuring effective insulative protection for the battery cell 20.

According to some embodiments of this application, optionally, the first dielectric film 251 includes a second opening 253. The second opening 253 is configured to avoid an electrode terminal 214 and a pressure relief mechanism 213 of the battery cell 20.

The second opening 253 is an opening on the body portion 2511 of the first dielectric film 251, and runs through the body portion 2511 of the first dielectric film 251. The number and shape of the second openings 253 are not limited, and may be arranged based on the components that need to be avoided on the end cap 212. For example, when electrode terminals 214 and a pressure relief mechanism 213 are disposed on the end cap 212, one second opening 253 may be created for each electrode terminal 214 and the pressure relief mechanism so that the electrode terminal and the pressure relief mechanism can contact the outside through the second opening 253. In addition, the shape and size of the second opening 253 may be designed in such a way as to adapt to the shape and area of the region occupied by the electrode terminal 214 and the pressure relief mechanism 213 on the end cap 212. The second opening 253 shown in FIG. 5 and FIG. 6 is merely an example, and constitutes no limitation. To more intuitively show the state of the first dielectric film 251 in a process of covering the end cap 212 of the battery cell 20, FIG. 6 shows just the second opening 253, without showing the electrode terminal 214 and pressure relief mechanism 213 corresponding to the second opening 253.

By creating the second opening 253 on the first dielectric film 251, the components disposed on the end cap 212 of the battery cell 20, such as the electrode terminal 214 and the pressure relief mechanism 213, are caused to be normally available. A part of the end cap 212, on which no component is disposed, can be covered by the first dielectric film 251, so as to ensure effective insulative protection of the dielectric film for the battery cell 20.

According to some embodiments of this application, optionally, the thickness of the extension portion 2512 is less than the thickness of the body portion 2511.

The thickness of the body portion 2511 and the thickness of the extension portion 2512 mean the thickness of the first dielectric film 251 itself at the corresponding part. As shown in FIG. 7, FIG. 7 is a close-up view of a part M shown in FIG. 5, that is, the part M in the first dielectric film 251 according to this embodiment of this application. The thickness of the body portion 2511 shown in FIG. 7 is L₁, and the thickness of the extension portion 2512 is L₂. As can be seen from FIG. 7, the thickness L₁ of the body portion 2511 is greater than the thickness L₂ of the extension portion 2512, and a stepped structure is formed at the junction between the body portion 2511 and the extension portion 2512. After the extension portion 2512 is bent toward the housing 211, the thin extension portion 2512 covers the outer sidewall of the housing 211, and the thick body portion 2511 covers the end cap 212 of the battery cell 20.

FIG. 7 shows just the difference in thickness between the body portion 2511 and the extension portion 2512 of the first dielectric film 251 on a battery cell 20 with a relatively small width. Understandably, for other types of battery cells 20 such as a battery cell 20 with an end cap 212 that contains a part protruding away from the interior of the battery cell 20, the thickness of the body portion 2511 still means the thickness of the film itself, without including a protrusion height of a corresponding protruding portion 255 beyond the body portion 2511, where the protruding portion is disposed on the first dielectric film 251.

The body portion 2511 assumes a specified thickness to ensure sufficient rigidity of the first dielectric film 251, and can maintain an original shape without deformation in a process of being fitted onto the end cap 212 of the battery cell 20 by an assembling machine, thereby ensuring accurate mounting of the first dielectric film 251. The thickness of the extension portion 2512 is less than the thickness of the body portion 2511, thereby occupying as little space as practicable in the battery while dielectrically protecting the outer sidewall, and improving the energy density of the battery.

According to some embodiments of this application, optionally, the thickness of the body portion 2511 is 0.3 to 0.5 mm, and the thickness of the extension portion 2512 is 0.1 mm.

The thickness of the body portion 2511 and the thickness of the extension portion 2512 mean the thickness of the first dielectric film 251 itself at different parts. As shown in FIG. 7, the thickness of the body portion 2511 is L₁, and the thickness of the extension portion 2512 is L₂. That is, the value of L₁ is 0.3 to 0.5 mm, and the value of L₂ is 0.1 mm.

If the thickness of the body portion 2511 is overly large, the height of the first dielectric film 251 that covers the end cap 212 will be increased, and may adversely affect the normal use of the components disposed on the end cap 212. In addition, the overly thick body portion increases the weight of the first dielectric film 251, and is at risk of falling off in a process of automatic assembling. If the thickness of the body portion 2511 is overly small, the first dielectric film 251 will be not rigid enough, and is prone to deform during the assembling, thereby increasing the difficulty of assembling. Therefore, the thickness of the body portion 2511 is set to be 0.3 mm to 0.5 mm, thereby not only ensuring normal use of the components on the end cap 212, but also facilitating assembling.

If the thickness of the extension portion 2512 is overly large, the extension portion occupies much space of the battery, thereby impairing the energy density of the battery. If the thickness of the extension portion is overly small, an adverse effect will be exerted on the production of the first dielectric film 251, and it is difficult to ensure effective insulative protection for the battery cell 20. Therefore, the thickness of the extension portion 2512 is set to 0.1 mm, thereby not only ensuring effective insulative protection for the battery cell 20, but also avoiding occupancy of much space, and improving the energy density of the battery.

According to claims 1 and 14, a reinforcing rib 254 is disposed at a junction between the extension portion 2512 and the body portion 2511.

The first dielectric film 251 itself is a relatively thin film, and therefore, is prone to fail in insulation when being scratched by an excessive external force or by a molten bead or sharp edge at a weld on the end cap 212. In addition, when a difference in thickness exists between the body portion 2511 and the extension portion 2512, the extension portion 2512 is prone to break off from the junction between the extension portion and the body portion 2511 during the bending, thereby failing to ensure effective insulative protection of the first dielectric film 251 for the end cap 212. Therefore, a reinforcing rib 254 is disposed at the junction between the extension portion 2512 and the body portion 2511. The shape and quantity of the reinforcing ribs may be set as required, as shown in FIG. 7. In a case that a difference in thickness exists between the extension portion 2512 and the body portion 2511, the reinforcing rib 254 may be disposed in a stepped structure formed between the extension portion 2512 and the body portion 2511. In a process of bending the extension portion 2512 of the first dielectric film 251 equipped with the reinforcing rib 254, the extension portion may be bent toward the housing 211 of the battery cell 20 along an edge of the reinforcing rib 254.

The reinforcing rib 254 disposed at the junction between the extension portion 2512 and the body portion 2511 increases the strength of the first dielectric film 251, avoids insulation failure caused by damage to the first dielectric film 251, and ensures effective insulative protection of the first dielectric film 251 for the battery cell 20.

According to some embodiments of this application, optionally, the body portion 2511 includes a protruding portion 255. The protruding portion 255 protrudes beyond the body portion 2511 from a side of the body portion 2511, the side being away from the battery cell 20. The protruding portion is recessed in the body portion 2511 on a side oriented toward the battery cell 20, so as to form a cavity structure. The cavity structure is configured to accommodate a part of the end cap 212, the part protruding away from the interior of the battery cell 20.

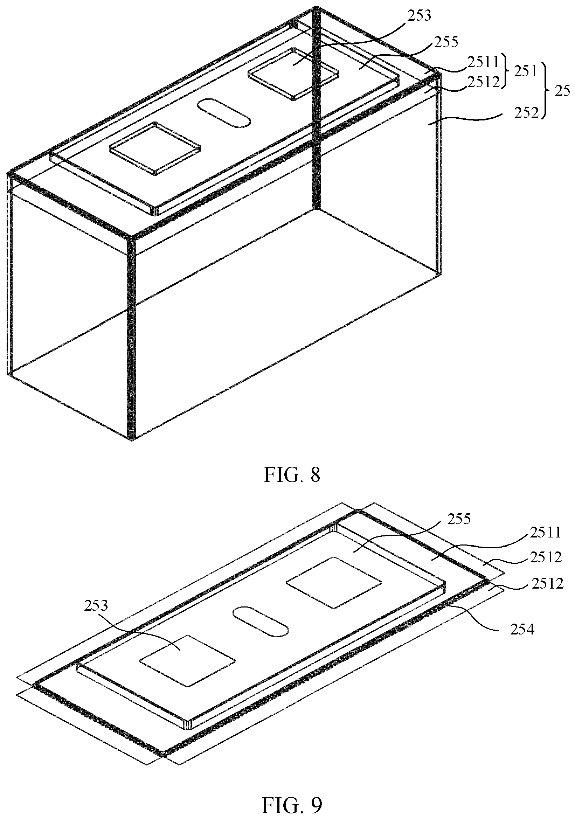

FIG. 8 is a schematic structural diagram of another battery cell 20 according to some embodiments of this application, and shows a battery cell 20 with an end cap 212 containing a bulge.

For the battery cell 20 with an end cap 212 containing a bulge, the body portion 2511 of the first dielectric film 251 may include a protruding portion 255. The shape and size of the protruding portion 255 adapt to the shape and size of the bulge on the battery cell 20. To be specific, the protruding portion 255 protrudes beyond the body portion 2511 from a side of the body portion 2511, the side being away from the battery cell 20. The protruding portion is recessed in the body portion 2511 on a side oriented toward the battery cell 20. That is, the protruding portion 255 on the body portion 2511 can form a cavity structure on the side oriented toward the battery cell 20. The cavity structure is configured to accommodate the bulge on the battery cell 20. Components such an electrode terminal 214 and an explosion-proof valve may be disposed on the bulge. Correspondingly, a second opening 253 may be created on the protruding portion 255 to avoid the components such as the electrode terminal 214 and the explosion-proof valve on the end cap 212.

FIG. 9 is a schematic structural diagram of another first dielectric film 251 according to some embodiments of this application, and shows a structure of the first dielectric film 251 before being put to cover the end cap 212. Each extension portion 2512 of the first dielectric film 251 shown in FIG. 9 is connected to an edge of the body portion 2511. The extension portions 2512 are separated from each other before being put to cover the end cap 212 of the battery cell 20 and at least a part of the outer sidewall.

The protruding portion 255 of the first dielectric film 251 adaptively provides insulative protection for the battery cell 20 with an end cap 212 containing a bulge, and prevents the dielectric film from being interfered with by a part of the end cap 212, the part protruding away from the interior of the battery cell 20. This avoids the problem of insulation failure caused by weak adhesion of the dielectric film, ensures effective insulative protection of the dielectric film for the battery cell 20, and improves the safety performance of the battery cell 20.

According to some embodiments of this application, optionally, an edge of a part of the battery cell 20, the part protruding beyond the end cap 212, assumes a chamfer structure. An edge of the cavity structure assumes a transition structure that matches the chamfer structure.

Using FIG. 8 and FIG. 9 as an example, the part of the battery cell 20, which protrudes beyond the end cap 212 as shown in FIG. 8 and FIG. 9, is in the shape of a cuboid. The edges of the cuboid may assume a chamfered structure. Correspondingly, in order to match the part of the battery cell 20 protruding beyond the end cap 212, the protruding portion 255 of the first dielectric film 251 is also in the shape of a cuboid. In addition, the edge of the cavity structure may assume a transition structure that matches the chamfer structure. For example, the part in the cavity structure, which covers the edge of the chamfer structure, assumes a transition structure.

The chamfer structure is disposed at the edge of the part of the battery cell 20, the part protruding beyond the end cap 212. In this way, the transition between the two intersecting faces on the end cap 212 is caused to be more natural. This can lower the requirement on the precision of alignment performed by the assembling machine between the first dielectric film 251 and the end cap 212 of the battery cell 20 in a process of assembling the first dielectric film 251. Even if a slight misalignment occurs, the first dielectric film and the end cap can be guided to a correct position by the chamfer structure. In addition, the cavity structure of the first dielectric film 251 assumes a transition structure that matches the chamfer structure, thereby making the first dielectric film 251 closely fit a part of the battery cell 20, the part protruding beyond the end cap 212. This avoids looseness of the dielectric film at the corners, and ensures effective insulative protection of the dielectric film for the battery cell 20.

According to some embodiments of this application, optionally, the body portion 2511 and the extension portions 2512 are made of the same material and formed in one piece.

The body portion 2511 and the extension portion 2512 may be made of the same material such as polypropylene (Polypropylene, PP). Therefore, the first dielectric film 251 can be formed in one piece during manufacturing. During the manufacturing of the first dielectric film 251, the body portion 2511 and the extension portion 2512 may be formed in one piece simultaneously by disposing a corresponding structure in a mold. In addition, in a case that a reinforcing rib 254 is disposed at the junction between the extension portion 2512 and the body portion 2511, the reinforcing rib 254 may also be made of the same material. A structure corresponding to the reinforcing rib 254 may also be disposed in the mold so that the entire first dielectric film 251 is formed in one piece.

When the body portion 2511 and the extension portions 2512 are made of the same material and formed in one piece, the body portion 2511 can be coherently connected to the extension portion 2512 without a need to be connected in an additional manner, thereby reducing the probability of a defect occurring in the first dielectric film 251 itself, and ensuring effective insulative protection of the body portion 2511 and the extension portion 2512 for the battery cell 20.

According to some embodiments of this application, optionally, a binder is disposed on a side of the first dielectric film 251, the side being oriented toward the battery cell 20. The binder is configured to adhere the first dielectric film 251 to the battery cell 20.

The binder may be a viscous material, and is coated onto a surface of the first dielectric film 251, the surface being oriented toward the battery cell 20. For example, the binder may be a back adhesive. During the assembling, the assembling machine may press down the body portion 2511 of the first dielectric film 251, so that the body portion closely fits the end cap 212 of the battery cell 20 through the binder. Similarly, the extension portion 2512 is bent toward the housing 211 of the battery cell 20 after being pressed down. The binder disposed on a side of the extension portion 2512, the side being oriented toward the battery cell 20, is adhered to the outer sidewall of the battery cell 20 after being bent, thereby making the first dielectric film 251 adhere to the battery cell 20.

By disposing the binder on a side of the first dielectric film 251, the side being oriented toward the battery cell 20, the first dielectric film 251 is made to closely fit the battery cell 20 and not prone to fall off, thereby ensuring effective insulative protection of the first dielectric film 251 for the end cap 212 of the battery cell 20.

According to some embodiments of this application, optionally, the body portion 2511 is quadrilateral, and the number of the extension portions 2512 is four.

When the shape of the battery cell 20 that needs to be dielectrically protected is a quadrangular prism, the shape of the body portion 2511 of the first dielectric film 251 may be quadrilateral. Each edge of the quadrilateral is connected to an extension portion 2512. Therefore, the number of the extension portions 2512 is four.

The body portion 2511 is quadrilateral and the number of extension portions 2512 is four, thereby ensuring that the body portion 2511 fully covers the end cap 212 of the battery cell 20. In addition, the extension portion 2512 can cover at least a part of each outer sidewall after being bent. In this way, all the junction between the end cap 212 and the sidewall can be covered by the first dielectric film 251, thereby ensuring effective insulative protection of the dielectric film for the battery cell 20.

According to some embodiments of this application, optionally, the battery cell 20 further includes a second dielectric film 252. The second dielectric film 252 wraps the housing 211. An edge of the second dielectric film 252, the edge being oriented toward the extension portion 2512, does not exceed an edge of intersection between the housing 211 and the end cap 212. The second dielectric film 252 is configured to dielectrically protect the housing 211 of the battery cell 20.

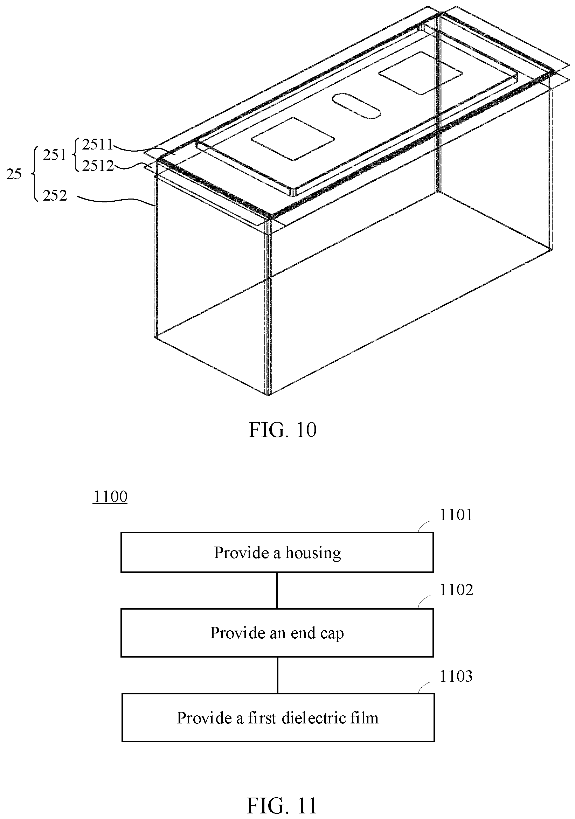

Using the battery cell 20 shown in FIG. 10 as an example, FIG. 10 is a schematic structural diagram of another battery cell 20 according to some embodiments of this application. The battery cell 20 in FIG. 10 further includes a second dielectric film 252. The second dielectric film 252 wraps on an outer surface of the housing 211 of the battery cell 20, and is configured to dielectrically protect the housing 211 of the battery cell 20. When the first dielectric film 251 dielectrically protects the end cap 212 of the battery cell 20, the extension portion 2512 of the first dielectric film 251 can be bent toward the housing 211 and cover at least a part of the outer sidewall of the housing 211. Therefore, the second dielectric film 252 does not need to cover the outer sidewall of the entire housing 211 when covering the housing 211. Moreover, in this embodiment of this application, the second dielectric film 252 on the sidewall does not need to be folded toward the end cap 212. Accordingly, the edge of the second dielectric film 252, which is oriented toward the extension portion 2512, does not need to exceed the edge of intersection between the housing 211 and the end cap 212. Therefore, in the battery cell 20 according to this embodiment of this application, the second dielectric film 252 may coincide with the extension portion 2512 of the first dielectric film 251 or may be at a specified distance from the extension portion 2512 of the first dielectric film 251, or the edge of the second dielectric film 252, which is oriented toward the extension portion 2512, may coincide with the edge of the extension portion 2512.

For ease of description, a specified clearance exists between the second dielectric film 252 shown in FIG. 10 and the housing 211 of the battery cell 20. In fact, the second dielectric film 252 closely fits the housing 211. For example, the second dielectric film 252 may be adhered to the housing 211 of the battery cell 20 by a binder.

The second dielectric film 252 can serve to dielectrically protect the housing 211 of the battery cell 20. In addition, the second dielectric film 252 does not need to be folded toward the end cap 212, thereby effectively avoiding the interference caused to the folded edge by the components such as the electrode terminal 214 on the end cap 212 or by a protruding structure on the end cap 212, and also preventing the dielectric film from falling off, and in turn, ensuring effective insulative protection of the dielectric film for the battery cell 20.

In some embodiments of this application, optionally, the edge of the second dielectric film 252, which is oriented toward the extension portion 2512, is connected to the edge of the extension portion 2512.

In a possible embodiment, the second dielectric film 252 neither coincides with, nor is at a distance from, the extension portion 2512 of the first dielectric film 251. In other words, the edge of the second dielectric film 252, which is oriented toward the extension portion 2512, may be connected to the edge of the extension portion 2512 of the first dielectric film 251. The extension portion 2512 of the first dielectric film 251 covers a part of the housing 211 of the battery cell 20. Therefore, the second dielectric film 252 covers the remaining part of the housing 211. In other words, the extension portion 2512 of the first dielectric film 251 and the second dielectric film 252 can just cover the entire housing 211 of the battery cell 20.

The edge of the second dielectric film 252, which is oriented toward the extension portion 2512, is connected to the edge of the extension portion 2512, so that neither an overlapping part of the dielectric film nor a part not covered with the dielectric film exists on the housing 211 of the battery cell 20. In this way, the second dielectric film serves a waterproof function to some extent while dielectrically protecting the battery cell 20, and prevents the space on the shell of the battery cell 20 from being occupied by the overlapping part, thereby increasing the battery density.

According to claim 12, this application further provides a battery. The battery includes: the battery cell 20 according to any one of claims 1 to 11; and a box, configured to accommodate the battery cell 20.

According to claim 13, this application further provides an electrical device. The electrical device includes the battery according to claim 12, and the battery is configured to provide electrical energy for the electrical device.

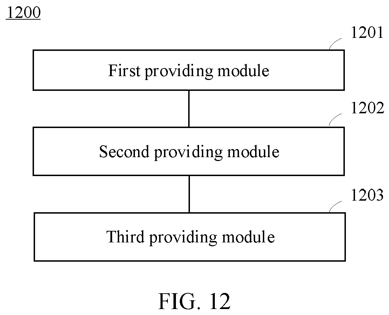

The battery cell 20, the battery, and the electrical device according to some embodiments of this application have been described above. The following describes, with reference to FIG. 11 and FIG. 12, a method according to claim 14 and apparatus for manufacturing a battery cell 20 according to an embodiment of this application. For information not detailed below, reference may be made to the preceding embodiments.

FIG. 11 is a schematic flowchart of a method 1100 for manufacturing a battery cell 20 according to some embodiments of this application. As shown in FIG. 11, the method 1100 may include the following steps:
1101. Providing a housing 211, where the housing 211 includes a first opening and is configured to accommodate an electrode assembly of the battery cell 20;
1102. Providing an end cap 212, where the end cap 212 is configured to fit and cover the first opening; and
1103. Providing a first dielectric film 251, where the first dielectric film is configured to dielectrically protect the end cap 212. The first dielectric film 251 includes: a body portion 2511, where the body portion 2511 is configured to cover a surface of the end cap 212, the surface being away from the housing 211; and a plurality of extension portions 2512. The plurality of extension portions 2512 surround the body portion 2511. Each extension portion 2512 among the plurality of extension portions 2512 is connected to one edge of the body portion 2511 and extends away from the center of the body portion 2511. The extension portion 2512 is able to be bent toward the housing 211 and cover at least a part of an outer sidewall of the housing 211.

FIG. 12 is a schematic block diagram of an apparatus for manufacturing a battery cell 20 according to some embodiments of this application. As shown in FIG. 12, the apparatus 1200 may include:
a first providing module 1201, configured to provide a housing 211, where the housing 211 includes a first opening and is configured to accommodate an electrode assembly of the battery cell 20;
a second providing module 1202, configured to provide an end cap 212, where the end cap 212 is configured to fit and cover the first opening; and
a third providing module 1203, configured to provide a first dielectric film 251, where the first dielectric film is configured to dielectrically protect the end cap 212, and the first dielectric film 251 includes: a body portion 2511, the body portion 2511 being configured to cover a surface of the end cap 212, and the surface being away from the housing 211; and a plurality of extension portions 2512. The plurality of extension portions 2512 surround the body portion 2511. Each extension portion 2512 among the plurality of extension portions 2512 is connected to one edge of the body portion 2511 and extends away from the center of the body portion 2511. The extension portion 2512 is able to be bent toward the housing 211 and cover at least a part of an outer sidewall of the housing 211.

## Claims

1. A battery cell (20), comprising:
a housing (211), comprising a first opening and configured to accommodate an electrode assembly (22) of the battery cell (20);
an end cap (212), configured to fit and cover the first opening; and
a first dielectric film (251), configured to dielectrically protect the end cap (212), wherein the first dielectric film (251) comprises:
a body portion (2511), wherein the body portion (2511) is configured to cover a surface of the end cap (212), the surface being away from the housing (211); and
a plurality of extension portions (2512), wherein the plurality of extension portions (2512) surround the body portion (2511), each of the plurality of extension portions (2512) is connected to one edge of the body portion (2511) and extends away from a center of the body portion (2511), and the extension portion (2512) is able to be bent toward the housing (211) and cover at least a part of an outer sidewall of the housing (211);
**characterized in that** a reinforcing rib (254) is disposed at a junction between the extension portion (2512) and the body portion (2511).

2. The battery cell (20) according to claim 1, **characterized in that** a thickness of the extension portion (2512) is less than a thickness of the body portion (2511).

3. The battery cell (20) according to any one of claims 1 to 2, **characterized in that** the first dielectric film (251) comprises a second opening (253), and the second opening (253) is configured to avoid an electrode terminal (214) and a pressure relief mechanism (213) of the battery cell (20).

4. The battery cell (20) according to any one of claims 1 to 3, **characterized in that** the body portion (2511) comprises a protruding portion (255), and the protruding portion (255) protrudes beyond the body portion (2511) from a side of the body portion (2511), the side being away from the battery cell (20); the protruding portion (255) is recessed in the body portion (2511) on a side oriented toward the battery cell (20), so as to form a cavity structure; and the cavity structure is configured to accommodate a part of the end cap (212), the part protruding away from an interior of the battery cell (20).

5. The battery cell (20) according to claim 4, **characterized in that** an edge of a part of the battery cell (20), the part protruding beyond the end cap (212), assumes a chamfer structure; and an edge of the cavity structure assumes a transition structure that matches the chamfer structure.

6. The battery cell (20) according to any one of claims 1 to 5, **characterized in that** the body portion (2511) and the extension portions (2512) are made of a same material and formed in one piece.

7. The battery cell (20) according to any one of claims 1 to 6, **characterized in that** a binder is disposed on a side of the first dielectric film (251), the side being oriented toward the battery cell (20); and the binder is configured to adhere the first dielectric film (251) to the battery cell (20).

8. The battery cell (20) according to any one of claims 1 to 7, **characterized in that** a thickness of the body portion (2511) is 0.3 to 0.5 mm, and a thickness of the extension portion (2512) is 0.1 mm.

9. The battery cell (20) according to any one of claims 1 to 8, **characterized in that** the body portion (2511) is quadrilateral, and a number of the extension portions (2512) is four.

10. The battery cell (20) according to any one of claims 1 to 9, **characterized in that** the battery cell (20) further comprises:
a second dielectric film, wherein the second dielectric film wraps the housing (211); an edge of the second dielectric film, the edge being oriented toward the extension portion (2512), does not exceed an edge of intersection between the housing (211) and the end cap (212); the second dielectric film is configured to dielectrically protect the housing (211) of the battery cell (20).

11. The battery cell (20) according to any one of claims 1 to 10, **characterized in that**, an edge of a second dielectric film, the edge being oriented toward the extension portion (2512), is connected to an edge of the extension portion (2512).

12. A battery (10), **characterized in that** the battery (10) comprises:
the battery cell (20) according to any one of claims 1 to 11; and
a box (11), configured to accommodate the battery cell (20).

13. An electrical device, **characterized in that** the electrical device comprises the battery (10) according to claim 12, and the battery (10) is configured to provide electrical energy for the electrical device.

14. A method for manufacturing a battery cell (20), **characterized in that** the method comprises:
providing a housing (211), wherein the housing (211) comprises a first opening and is configured to accommodate an electrode assembly (22) of the battery cell (20);
providing an end cap (212), wherein the end cap (212) is configured to fit and cover the first opening; and
providing a first dielectric film (251), wherein the first dielectric film (251) is configured to dielectrically protect the end cap (212), and the first dielectric film (251) comprises:
a body portion (2511), wherein the body portion (2511) is configured to cover a surface of the end cap (212), the surface being away from the housing (211); and
a plurality of extension portions (2512), wherein the plurality of extension portions (2512) surround the body portion (2511), each of the plurality of extension portions (2512) is connected to one edge of the body portion (2511) and extends away from a center of the body portion (2511), and the extension portion (2512) is able to be bent toward the housing (211) and cover at least a part of an outer sidewall of the housing (211); wherein a reinforcing rib (254) is disposed at a junction between the extension portion (2512) and the body portion (2511).

## Patentansprüche

1. Batteriezelle (20), umfassend:
ein Gehäuse (211), das eine erste Öffnung umfasst und ausgelegt ist, eine Elektrodenanordnung (22) der Batteriezelle (20) aufzunehmen;
eine Endkappe (212), die ausgelegt ist, an die erste Öffnung angepasst zu werden und die erste Öffnung abzudecken; und
eine erste dielektrische Folie (251), die ausgelegt ist, die Endkappe (212) dielektrisch zu schützen, wobei die erste dielektrische Folie (251) umfasst:
einen Hauptabschnitt (2511), wobei der Hauptabschnitt (2511) ausgelegt ist, eine Oberfläche der Endkappe (212) abzudecken, wobei die Oberfläche von dem Gehäuse (211) abgewandt ist; und
eine Vielzahl von Erstreckungsabschnitten (2512), wobei die Vielzahl von Erstreckungsabschnitten (2512) den Hauptabschnitt (2511) umgibt, jeder der Vielzahl von Erstreckungsabschnitten (2512) mit einer Kante des Hauptabschnitts (2511) verbunden ist und sich von einem Zentrum des Hauptabschnitts (2511) weg erstreckt, und der Erstreckungsabschnitt (2512) zu dem Gehäuse (211) hin gebogen werden kann und mindestens einen Teil einer äußeren Seitenwand des Gehäuses (211) abdecken kann;
**dadurch gekennzeichnet, dass** eine Verstärkungsrippe (254) an einem Übergang zwischen dem Erstreckungsabschnitt (2512) und dem Hauptabschnitt (2511) angeordnet ist.

2. Batteriezelle (20) nach Anspruch 1, **dadurch gekennzeichnet, dass** eine Dicke des Erstreckungsabschnitts (2512) geringer ist als eine Dicke des Hauptabschnitts (2511).

3. Batteriezelle (20) nach einem der Ansprüche 1 bis 2, **dadurch gekennzeichnet, dass** die erste dielektrische Folie (251) eine zweite Öffnung (253) umfasst und die zweite Öffnung (253) ausgelegt ist, einen Elektrodenanschluss (214) und einen Druckentlastungsmechanismus (213) der Batteriezelle (20) freizugeben.

4. Batteriezelle (20) nach einem der Ansprüche 1 bis 3, **dadurch gekennzeichnet, dass** der Hauptabschnitt (2511) einen Vorsprungsabschnitt (255) umfasst und der Vorsprungsabschnitt (255) über den Hauptabschnitt (2511) hinaus von einer Seite des Hauptabschnitts (2511) vorsteht, wobei die Seite von der Batteriezelle (20) abgewandt ist; der Vorsprungsabschnitt (255) in den Hauptabschnitt (2511) auf einer zur Batteriezelle (20) hin orientierten Seite eingelassen ist, um eine Hohlraumstruktur zu bilden; und die Hohlraumstruktur ausgelegt ist, einen Teil der Endkappe (212) aufzunehmen, wobei der Teil von einem Inneren der Batteriezelle (20) weg vorsteht.

5. Batteriezelle (20) nach Anspruch 4, **dadurch gekennzeichnet, dass** eine Kante eines Teils der Batteriezelle (20), wobei der Teil über die Endkappe (212) hinaus vorsteht, eine Fasenstruktur aufweist; und eine Kante der Hohlraumstruktur eine Übergangsstruktur aufweist, die an die Fasenstruktur angepasst ist.

6. Batteriezelle (20) nach einem der Ansprüche 1 bis 5, **dadurch gekennzeichnet, dass** der Hauptabschnitt (2511) und die Erstreckungsabschnitte (2512) aus demselben Material hergestellt und einstückig ausgebildet sind.

7. Batteriezelle (20) nach einem der Ansprüche 1 bis 6, **dadurch gekennzeichnet, dass** ein Bindemittel auf einer zur Batteriezelle (20) hin orientierten Seite der ersten dielektrischen Folie (251) angeordnet ist; und das Bindemittel ausgelegt ist, die erste dielektrische Folie (251) an der Batteriezelle (20) anzuhaften.

8. Batteriezelle (20) nach einem der Ansprüche 1 bis 7, **dadurch gekennzeichnet, dass** eine Dicke des Hauptabschnitts (2511) 0,3 bis 0,5 mm beträgt und eine Dicke des Erstreckungsabschnitts (2512) 0,1 mm beträgt.

9. Batteriezelle (20) nach einem der Ansprüche 1 bis 8, **dadurch gekennzeichnet, dass** der Hauptabschnitt (2511) viereckig ist und eine Anzahl der Erstreckungsabschnitte (2512) vier ist.

10. Batteriezelle (20) nach einem der Ansprüche 1 bis 9, **dadurch gekennzeichnet, dass** die Batteriezelle (20) ferner umfasst:
eine zweite dielektrische Folie, wobei die zweite dielektrische Folie das Gehäuse (211) umwickelt; eine Kante der zweiten dielektrischen Folie, wobei die Kante zu dem Erstreckungsabschnitt (2512) hin orientiert ist, nicht über eine Schnittkante zwischen dem Gehäuse (211) und der Endkappe (212) hinausgeht; wobei die zweite dielektrische Folie ausgelegt ist, das Gehäuse (211) der Batteriezelle (20) dielektrisch zu schützen.

11. Batteriezelle (20) nach einem der Ansprüche 1 bis 10, **dadurch gekennzeichnet, dass** eine Kante einer zweiten dielektrischen Folie, wobei die Kante zu dem Erstreckungsabschnitt (2512) hin orientiert ist, mit einer Kante des Erstreckungsabschnitts (2512) verbunden ist.

12. Batterie (10), **dadurch gekennzeichnet, dass** die Batterie (10) umfasst:
die Batteriezelle (20) nach einem der Ansprüche 1 bis 11; und
einen Behälter (11), der ausgelegt ist, die Batteriezelle (20) aufzunehmen.

13. Elektrische Vorrichtung, **dadurch gekennzeichnet, dass** die elektrische Vorrichtung die Batterie (10) nach Anspruch 12 umfasst und die Batterie (10) ausgelegt ist, elektrische Energie für die elektrische Vorrichtung bereitzustellen.

14. Verfahren zum Herstellen einer Batteriezelle (20), **dadurch gekennzeichnet, dass** das Verfahren umfasst:
Bereitstellen eines Gehäuses (211), wobei das Gehäuse (211) eine erste Öffnung umfasst und ausgelegt ist, eine Elektrodenanordnung (22) der Batteriezelle (20) aufzunehmen;
Bereitstellen einer Endkappe (212), wobei die Endkappe (212) ausgelegt ist, an die erste Öffnung angepasst zu werden und die erste Öffnung abzudecken; und
Bereitstellen einer ersten dielektrischen Folie (251), wobei die erste dielektrische Folie (251) ausgelegt ist, die Endkappe (212) dielektrisch zu schützen, und die erste dielektrische Folie (251) umfasst:
einen Hauptabschnitt (2511), wobei der Hauptabschnitt (2511) ausgelegt ist, eine Oberfläche der Endkappe (212) abzudecken, wobei die Oberfläche von dem Gehäuse (211) abgewandt ist; und
eine Vielzahl von Erstreckungsabschnitten (2512), wobei die Vielzahl von Erstreckungsabschnitten (2512) den Hauptabschnitt (2511) umgibt, jeder der Vielzahl von Erstreckungsabschnitten (2512) mit einer Kante des Hauptabschnitts (2511) verbunden ist und sich von einem Zentrum des Hauptabschnitts (2511) weg erstreckt, und der Erstreckungsabschnitt (2512) zu dem Gehäuse (211) hin gebogen werden kann und mindestens einen Teil einer äußeren Seitenwand des Gehäuses (211) abdecken kann; wobei eine Verstärkungsrippe (254) an einem Übergang zwischen dem Erstreckungsabschnitt (2512) und dem Hauptabschnitt (2511) angeordnet ist.

## Revendications

1. Élément de batterie (20), comprenant :
un boîtier (211), comprenant une première ouverture et configuré pour recevoir un ensemble électrode (22) de l'élément de batterie (20) ;
un bouchon d'extrémité (212), configuré pour s'adapter à la première ouverture et la recouvrir ; et
un premier film diélectrique (251), configuré pour protéger de manière diélectrique le bouchon d'extrémité (212), dans lequel le premier film diélectrique (251) comprend :
une partie corps (2511), dans lequel la partie corps (2511) est configurée pour recouvrir une surface du bouchon d'extrémité (212), la surface étant éloignée du boîtier (211) ; et
une pluralité de parties d'extension (2512), dans lequel la pluralité de parties d'extension (2512) entoure la partie corps (2511), chacune de la pluralité de parties d'extension (2512) est reliée à un bord de la partie corps (2511) et s'étend à l'opposé d'un centre de la partie corps (2511), et la partie d'extension (2512) est apte à être fléchie en direction du boîtier (211) et à recouvrir au moins une partie d'une paroi latérale extérieure du boîtier (211) ;
**caractérisé en ce qu'**une nervure de renforcement (254) est disposée à une jonction entre la partie d'extension (2512) et la partie corps (2511).

2. Élément de batterie (20) selon la revendication 1, **caractérisé en ce qu'**une épaisseur de la partie d'extension (2512) est inférieure à une épaisseur de la partie corps (2511).

3. Élément de batterie (20) selon l'une quelconque des revendications 1 et 2, **caractérisé en ce que** le premier film diélectrique (251) comprend une seconde ouverture (253), et la seconde ouverture (253) est configurée pour éviter une borne d'électrode (214) et un mécanisme de détente de pression (213) de l'élément de batterie (20).

4. Élément de batterie (20) selon l'une quelconque des revendications 1 à 3, **caractérisé en ce que** la partie corps (2511) comprend une partie en saillie (255), et la partie en saillie (255) fait saillie au-delà de la partie corps (2511) depuis un côté de la partie corps (2511), le côté étant éloigné de l'élément de batterie (20) ; la partie en saillie (255) est enfoncée dans la partie corps (2511) sur un côté orienté vers l'élément de batterie (20), de façon à former une structure de cavité ; et la structure de cavité est configurée pour recevoir une partie du bouchon d'extrémité (212), la partie faisant saillie à l'opposé d'un intérieur de l'élément de batterie (20).

5. Élément de batterie (20) selon la revendication 4, **caractérisé en ce qu'**un bord d'une partie de l'élément de batterie (20), la partie faisant saillie au-delà du bouchon d'extrémité (212), prend une forme de structure en biseau ; et un bord de la structure de cavité prend une forme structure de transition qui correspond à la structure en biseau.

6. Élément de batterie (20) selon l'une quelconque des revendications 1 à 5, **caractérisé en ce que** la partie corps (2511) et les parties d'extension (2512) sont faites d'un même matériau et formées d'un seul tenant.

7. Élément de batterie (20) selon l'une quelconque des revendications 1 à 6, **caractérisé en ce qu'**un liant est disposé sur un côté du premier film diélectrique (251), le côté étant orienté vers l'élément de batterie (20) ; et le liant est configuré pour faire adhérer le premier film diélectrique (251) à l'élément de batterie (20).

8. Élément de batterie (20) selon l'une quelconque des revendications 1 à 7, **caractérisé en ce qu'**une épaisseur de la partie corps (2511) est comprise entre 0,3 et 0,5 mm, et une épaisseur de la partie d'extension (2512) est égale à 0,1 mm.

9. Élément de batterie (20) selon l'une quelconque des revendications 1 à 8, **caractérisé en ce que** la partie corps (2511) est quadrilatérale, et un nombre de parties d'extension (2512) est égal à quatre.

10. Élément de batterie (20) selon l'une quelconque des revendications 1 à 9, **caractérisé en ce que** l'élément de batterie (20) comprend en outre :
un second film diélectrique, dans lequel le second film diélectrique enveloppe le boîtier (211) ; un bord du second film diélectrique, le bord étant orienté vers la partie d'extension (2512), ne dépasse pas un bord de l'intersection entre le boîtier (211) et le bouchon d'extrémité (212) ; le second film diélectrique est configuré pour protéger de manière diélectrique le boîtier (211) de l'élément de batterie (20).

11. Élément de batterie (20) selon l'une quelconque des revendications 1 à 10, **caractérisé en ce qu'**un bord d'un second film diélectrique, le bord étant orienté vers la partie d'extension (2512), est relié à un bord de la partie d'extension (2512).

12. Batterie (10), **caractérisée en ce que** la batterie (10) comprend :
l'élément de batterie (20) selon l'une quelconque des revendications 1 à 11 ; et
une boîte (11), configurée pour recevoir l'élément de batterie (20).

13. Dispositif électrique, **caractérisé en ce que** le dispositif électrique comprend la batterie (10) selon la revendication 12, et la batterie (10) est configurée pour fournir de l'énergie électrique au dispositif électrique.

14. Procédé de fabrication d'un élément de batterie (20), **caractérisé en ce que** le procédé comprend :
la fourniture d'un boîtier (211), dans lequel le boîtier (211) comprend une première ouverture et est configuré pour recevoir un ensemble électrode (22) de l'élément de batterie (20) ;
la fourniture d'un bouchon d'extrémité (212), dans lequel le bouchon d'extrémité (212) est configuré pour s'adapter à la première ouverture et la recouvrir ; et
la fourniture d'un premier film diélectrique (251), dans lequel le premier film diélectrique (251) est configuré pour protéger de manière diélectrique le bouchon d'extrémité (212), et le premier film diélectrique (251) comprend :
une partie corps (2511), dans lequel la partie corps (2511) est configurée pour recouvrir une surface du bouchon d'extrémité (212), la surface étant éloignée du boîtier (211) ; et
une pluralité de parties d'extension (2512), dans lequel la pluralité de parties d'extension (2512) entoure la partie corps (2511), chacune de la pluralité de parties d'extension (2512) est reliée à un bord de la partie corps (2511) et s'étend à l'opposé d'un centre de la partie corps (2511), et la partie d'extension (2512) est apte à être fléchie en direction du boîtier (211) et à recouvrir au moins une partie d'une paroi latérale extérieure du boîtier (211) ; dans lequel une nervure de renforcement (254) est disposée à une jonction entre la partie d'extension (2512) et la partie corps (2511).
